# EUROPEAN PATENT SPECIFICATION

(11) **EP 3 128 792 B1**
(45) Date of publication and mention of the grant of the patent: **19.06.2019**
(21) Application number: 14892112.5
(22) Date of filing: 13.05.2014
(51) Int. Cl.: H04W 4/80, H04B 17/318, H04W 64/00

(54) **POSITIONING METHOD AND COMMUNICATION DEVICE**
POSITIONIERUNGSVERFAHREN UND KOMMUNIKATIONSVORRICHTUNG
PROCÉDÉ DE POSITIONNEMENT ET DISPOSITIF DE COMMUNICATION

(43) Date of publication of application: 08.02.2017
(60) Divisional application: 19173312.0
(73) Proprietor: Huawei Technologies Co. Ltd., Shenzhen, Guangdong 518129 (CN)
(72) Inventor: CHEN, Daiting, Shenzhen Guangdong 518129 (CN)
(74) Representative: Goddar, Heinz J.
(86) International application number: PCT/CN2014/077372
(87) International publication number: WO 2015/172312

(56) References cited:
- CN-A- 102 271 397
- CN-A- 102 348 160
- CN-A- 102 682 257
- US-A1- 2013 217 332
- US-A1- 2013 281 110
- US-A1- 2013 285 855

## Description

### TECHNICAL FIELD

Embodiments of the present invention relate to the field of communications technologies, and in particular, to a positioning method and a communications device.

### BACKGROUND

A Global Position System (Global Position System, GPS for short) is an intermediate circular orbit satellite navigation system, and the GPS can provide accurate positioning and velocity measurement and a high-precision time standard in most regions on the Earth surface. Therefore, a communications device that has a GPS function can position a position of the communications device by using the GPS.

However, in the prior art, a communications device can learn position information of the communications device but cannot obtain position information of another communications device.

US 2013/0281110 A1 discloses a method of determining a location of a querying mobile device by using participating mobile devices physically proximate to the querying mobile device. The method includes the steps of, in response to receiving a request to determine a location of the query mobile device, sending to the participating mobile devices a request to scan for a location broadcast message transmitted by the query mobile device, receiving one or more location broadcast reports from the participating mobile devices, and estimating the location of the querying mobile device based on the received location broadcast reports and respective locations of the participating mobile devices.

US 2013/0217332 A1 discloses a method ofdetermining a location of a wireless identity transmitter by using one or more proximity broadcast receivers near the wireless identity transmitter. The proximity broadcast receivers receive a broadcast message transmitted from the wireless identity transmitter and relay information (i.e. sighting messages) associated with receiving the broadcast message along with the wireless identity transmitter's identification code to a central server. The relayed information includes a timestamp indicating when the respective proximity broadcast receiver received the broadcast message. Then, the central server determines an accurate location of the wireless identity transmitter based on the sighting messages and the known locations of the proximity broadcast receivers

US 2013/0285855 A1 discloses using at least two different location determination/estimation methods together for increasing the accuracy of an estimated location of the target mobile station.

### SUMMARY

Embodiments of the present invention provide a positioning method and a communications device that are used to implement that position information of another communications device can be obtained.

According to a first aspect, an embodiment of the present invention provides a positioning method, including:
receiving, by a first communications device, a first positioning request message, where the first positioning request message includes an identifier of a to-be-positioned communications device, and the first positioning request message is used to request position information of the to-be-positioned communications device; and
obtaining, by the first communications device, the position information of the to-be-positioned communications device according to the identifier of the to-be-positioned communications device by using a short-range wireless communications technology.

In a first possible implementation manner of the first aspect, after the obtaining, by the first communications device, the position information of the to-be-positioned communications device according to the identifier of the to-be-positioned communications device by using a short-range wireless communications technology, the method further includes:
storing, by the first communications device, a correspondence between the identifier and the obtained position information that are of the to-be-positioned communications device according to the identifier of the to-be-positioned communications device and the position information of the to-be-positioned communications device; and
determining, by the first communications device, updated position information of the to-be-positioned communications device from the stored correspondence according to the identifier of the to-be-positioned communications device, wherein the obtained position information of the to-be-positioned communications device includes information sent from the to-be-positioned communications device and indicating that a holder of the to-be-positioned communications device travels to a destination, and the stored correspondence includes the information that the holder travels to the destination.

With reference to the first aspect or the first possible implementation manner of the first aspect, in a second possible implementation manner of the first aspect, before the obtaining, by the first communications device, the position information of the to-be-positioned communications device according to the identifier of the to-be-positioned communications device by using a short-range wireless communications technology, the method further includes:
receiving, by the first communications device by using the short-range wireless communications technology, a broadcast message sent by the to-be-positioned communications device, where the broadcast message includes the identifier and the position information that are of the to-be-positioned communications device; and
the obtaining, by the first communications device, the position information of the to-be-positioned communications device according to the identifier of the to-be-positioned communications device by using a short-range wireless communications technology includes:
   obtaining, by the first communications device, the position information of the to-be-positioned communications device according to the broadcast message.

With reference to the first aspect or the first possible implementation manner of the first aspect, in a third possible implementation manner of the first aspect, before the obtaining, by the first communications device, the position information of the to-be-positioned communications device according to the identifier of the to-be-positioned communications device by using a short-range wireless communications technology, the method further includes:
receiving, by the first communications device by using the short-range wireless communications technology, a broadcast message sent by the to-be-positioned communications device, where the broadcast message includes the identifier of the to-be-positioned communications device;
establishing, by the first communications device, a communication link to the to-be-positioned communications device according to the broadcast message;
sending, by the first communications device, a position information request message to the to-be-positioned communications device by using the communication link; and
receiving, by the first communications device, a position information response message sent by the to-be-positioned communications device, where the position information response message includes the position information of the to-be-positioned communications device; and
the obtaining, by the first communications device, the position information of the to-be-positioned communications device according to the identifier of the to-be-positioned communications device by using a short-range wireless communications technology includes:
   obtaining, by the first communications device, the position information of the to-be-positioned communications device according to the position information response message.

With reference to the first aspect or the first possible implementation manner of the first aspect, in a fourth possible implementation manner of the first aspect, before the obtaining, by the first communications device, the position information of the to-be-positioned communications device according to the identifier of the to-be-positioned communications device by using a short-range wireless communications technology, the method further includes:
receiving, by the first communications device by using the short-range wireless communications technology, a broadcast message sent by the to-be-positioned communications device, where the broadcast message includes the identifier of the to-be-positioned communications device; and
the obtaining, by the first communications device, the position information of the to-be-positioned communications device according to the identifier of the to-be-positioned communications device by using a short-range wireless communications technology includes:
   determining, by the first communications device, the position information of the to-be-positioned communications device according to signal strength of the broadcast message.

With reference to the first aspect or the first possible implementation manner of the first aspect, in a fifth possible implementation manner of the first aspect, before the obtaining, by the first communications device, the position information of the to-be-positioned communications device according to the identifier of the to-be-positioned communications device by using a short-range wireless communications technology, the method further includes:
sending, by the first communications device, a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and
receiving, by the first communications device, a second positioning response message sent by the third communications device, where the second positioning response message includes the position information of the to-be-positioned communications device; and
the obtaining, by the first communications device, the position information of the to-be-positioned communications device according to the identifier of the to-be-positioned communications device by using a short-range wireless communications technology includes:
   obtaining, by the first communications device, the position information of the to-be-positioned communications device according to the second positioning response message.

With reference to the first aspect or any possible implementation manner of the first to the fifth implementation manners of the first aspect, in a sixth possible implementation manner of the first aspect, the first communications device includes a display, and the receiving, by a first communications device, a first positioning request message includes:
receiving, by the first communications device, the first positioning request message entered by a user; and
after the obtaining, by the first communications device, the position information of the to-be-positioned communications device according to the identifier of the to-be-positioned communications device by using a short-range wireless communications technology, the method further includes:
   displaying the position information of the to-be-positioned communications device by using the display.

With reference to the first aspect or any possible implementation manner of the first to the sixth implementation manners of the first aspect, in a seventh possible implementation manner of the first aspect, the receiving, by a first communications device, a first positioning request message includes:
receiving, by the first communications device, the first positioning request message sent by a second communications device; and
after the obtaining, by the first communications device, the position information of the to-be-positioned communications device according to the identifier of the to-be-positioned communications device by using a short-range wireless communications technology, the method further includes:
   sending, by the first communications device, a first positioning response message to the second communications device, where the first positioning response message includes the position information of the to-be-positioned communications device.

According to a second aspect, an embodiment of the present invention provides a communications device, including:
a receiving unit, configured to receive a first positioning request message, where the first positioning request message includes an identifier of a to-be-positioned communications device, and the first positioning request message is used to request position information of the to-be-positioned communications device; and
a processing unit, configured to obtain, by using a short-range wireless communications technology, the position information of the to-be-positioned communications device according to the identifier of the to-be-positioned communications device that is included in the first positioning request message received by the receiving unit.

In a first possible implementation manner of the second aspect, the communications device further includes:
a storage unit, configured to: after the processing unit obtains, by using the short-range wireless communications technology, the position information of the to-be-positioned communications device according to the identifier of the to-be-positioned communications device that is included in the first positioning request message received by the receiving unit, store a correspondence between the identifier and the obtained position information that are of the to-be-positioned communications device according to the identifier of the to-be-positioned communications device and the position information of the to-be-positioned communications device; and
the processing unit is further configured to determine, according to the identifier of the to-be-positioned communications device, updated position information of the to-be-positioned communications device from the correspondence stored in the storage unit, wherein the obtained position information of the to-be-positioned communications device includes information sent from the to-be-positioned communications device and indicating that a holder of the to-be-positioned communications device travels to a destination, and the stored correspondence includes the information that the holder travels to the destination.

With reference to the second aspect or the first possible implementation manner of the second aspect, in a second possible implementation manner of the second aspect, the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device; and
the processing unit is specifically configured to obtain the position information of the to-be-positioned communications device according to the broadcast message.

With reference to the second aspect or the first possible implementation manner of the second aspect, in a third possible implementation manner of the second aspect, the communications device further includes an establishing unit and a first sending unit;
the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device;
the establishing unit is configured to establish a communication link to the to-be-positioned communications device according to the broadcast message received by the receiving unit;
the first sending unit is configured to send a position information request message to the to-be-positioned communications device by using the communication link established by the establishing unit;
the receiving unit is further configured to receive a position information response message sent by the to-be-positioned communications device, where the position information response message includes the position information of the to-be-positioned communications device; and
the processing unit is specifically configured to obtain the position information of the to-be-positioned communications device according to the position information response message.

With reference to the second aspect or the first possible implementation manner of the second aspect, in a fourth possible implementation manner of the second aspect, the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device; and
the processing unit is specifically configured to determine the position information of the to-be-positioned communications device according to signal strength of the broadcast message received by the receiving unit.

With reference to the second aspect or the first possible implementation manner of the second aspect, in a fifth possible implementation manner of the second aspect, the communications device further includes:
a first sending unit, configured to: before the processing unit obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology;
the receiving unit is further configured to receive a second positioning response message sent by the third communications device, where the second positioning response message includes the position information of the to-be-positioned communications device; and
the processing unit is specifically configured to obtain the position information of the to-be-positioned communications device according to the second positioning response message received by the receiving unit.

With reference to the second aspect or any possible implementation manner of the first to the fifth implementation manners of the second aspect, in a sixth possible implementation manner of the second aspect, the communications device further includes a display unit;
the receiving unit is specifically configured to receive the first positioning request message entered by a user; and
the display unit is configured to: after the processing unit obtains the position information of the to-be-positioned communications device according to the identifier of the to-be-positioned communications device by using the short-range wireless communications technology, display the position information of the to-be-positioned communications device.

With reference to the second aspect or any possible implementation manner of the first to the sixth implementation manners of the second aspect, in a seventh possible implementation manner of the second aspect, the communications device further includes a second sending unit;
the receiving unit is specifically configured to receive the first positioning request message sent by a second communications device; and
the second sending unit is configured to: after the processing unit obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

According to a third aspect, an example useful in understanding the present invention provides a communications device, including:
a transceiver, configured to receive a first positioning request message, where the first positioning request message includes an identifier of a to-be-positioned communications device, and the first positioning request message is used to request position information of the to-be-positioned communications device; and
a processor, configured to obtain, by using a short-range wireless communications technology, the position information of the to-be-positioned communications device according to the identifier of the to-be-positioned communications device that is included in the first positioning request message received by the transceiver.

In a first possible implementation manner of the third aspect, the communications device further includes:
a memory, configured to: after the processor obtains, by using the short-range wireless communications technology, the position information of the to-be-positioned communications device according to the identifier of the to-be-positioned communications device that is included in the first positioning request message received by the transceiver, store a correspondence between the identifier and the obtained position information that are of the to-be-positioned communications device according to the identifier of the to-be-positioned communications device and the position information of the to-be-positioned communications device; and
the processor is further configured to determine, according to the identifier of the to-be-positioned communications device, updated position information of the to-be-positioned communications device from the correspondence stored in the memory.

With reference to the third aspect or the first possible implementation manner of the third aspect, in a second possible implementation manner of the third aspect, the transceiver is further configured to: before the processor obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device; and
the processor is specifically configured to obtain the position information of the to-be-positioned communications device according to the broadcast message.

With reference to the third aspect or the first possible implementation manner of the third aspect, in a third possible implementation manner of the third aspect,
the transceiver is further configured to: before the processor obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device;
the processor is further configured to establish a communication link to the to-be-positioned communications device according to the broadcast message received by the transceiver;
the transceiver is further configured to send a position information request message to the to-be-positioned communications device by using the communication link established by the processor, and receive a position information response message sent by the to-be-positioned communications device, where the position information response message includes the position information of the to-be-positioned communications device; and
that the processor obtains the position information of the to-be-positioned communications device according to the identifier of the to-be-positioned communications device by using the short-range wireless communications technology is specifically: the processor obtains the position information of the to-be-positioned communications device according to the position information response message.

With reference to the third aspect or the first possible implementation manner of the third aspect, in a fourth possible implementation manner of the third aspect, the transceiver is further configured to: before the processor obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device; and
the processor is specifically configured to determine the position information of the to-be-positioned communications device according to signal strength of the broadcast message received by the transceiver.

With reference to the third aspect or the first possible implementation manner of the third aspect, in a fifth possible implementation manner of the third aspect, the transceiver is further configured to: before the processor obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and receive a second positioning response message sent by the third communications device, where the second positioning response message includes the position information of the to-be-positioned communications device; and
the processor is specifically configured to obtain the position information of the to-be-positioned communications device according to the second positioning response message received by the transceiver.

With reference to the third aspect or any possible implementation manner of the first to the fifth implementation manners of the third aspect, in a sixth possible implementation manner of the third aspect, the communications device further includes an output device;
the transceiver is specifically configured to receive the first positioning request message entered by a user; and
the output device is configured to: after the processor obtains the position information of the to-be-positioned communications device according to the identifier of the to-be-positioned communications device by using the short-range wireless communications technology, display the position information of the to-be-positioned communications device.

With reference to the third aspect or any possible implementation manner of the first to the sixth implementation manners of the third aspect, in a seventh possible implementation manner of the third aspect, that the transceiver receives the first positioning request message is specifically: the transceiver receives the first positioning request message sent by a second communications device; and
the transceiver is further configured to: after the processor obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

Another embodiment of the present inventions is a computer readable storage medium includes instructions which, being executed, performs the methods according to the aforementioned first aspect.

According to the positioning method and the communications device that are provided in the embodiments of the present invention, a first communications device receives a first positioning request message, where the first positioning request message includes an identifier of a to-be-positioned communications device, and the first positioning request message is used to request position information of the to-be-positioned communications device; and the first communications device obtains the position information of the to-be-positioned communications device according to the identifier of the to-be-positioned communications device by using a short-range wireless communications technology. Therefore, it is implemented that the first communications device can obtain position information of another communications device.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a first embodiment of a positioning method according to the present invention;
FIG. 2 is a flowchart of a second embodiment of a positioning method according to the present invention;
FIG. 3 is a flowchart of a third embodiment of a positioning method according to the present invention;
FIG. 4 is a flowchart of a fourth embodiment of a positioning method according to the present invention;
FIG. 5 is a flowchart of a fifth embodiment of a positioning method according to the present invention;
FIG. 6 is a flowchart of a sixth embodiment of a positioning method according to the present invention;
FIG. 7 is a schematic structural diagram of a first embodiment of a communications device according to the present invention;
FIG. 8 is a schematic structural diagram of a second embodiment of a communications device according to the present invention;
FIG. 9 is a schematic structural diagram of a third embodiment of a communications device according to the present invention; and
FIG. 10 is a schematic structural diagram of a fourth embodiment of a communications device according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

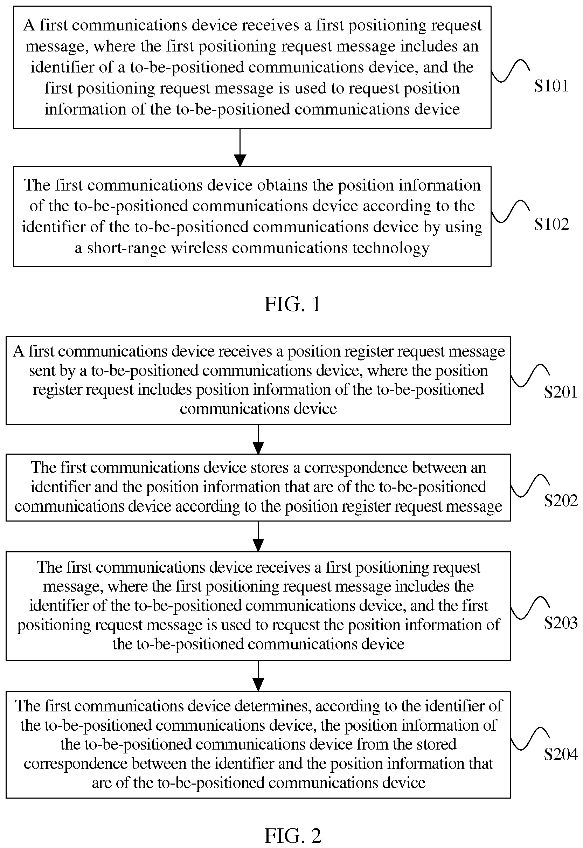

FIG. 1 is a flowchart of a first embodiment of a positioning method according to the present invention. As shown in FIG. 1, the method in this embodiment may include the following steps:
S101. A first communications device receives a first positioning request message, where the first positioning request message includes an identifier of a to-be-positioned communications device, and the first positioning request message is used to request position information of the to-be-positioned communications device.

In this embodiment, the first communications device receives the first positioning request message, where the first positioning request message includes the identifier of the to-be-positioned communications device, and the first positioning request message is used to request the position information of the to-be-positioned communications device corresponding to the identifier. The to-be-positioned communications device in this embodiment may be a communications device that supports a short-range wireless communications technology, where the short-range wireless communications technology may be Wireless Fidelity (Wireless Fidelity, WiFi for short), Bluetooth (Bluetooth), Near Field Communication (Near Field Communication, NFC for short), and the like.

S102. The first communications device obtains the position information of the to-be-positioned communications device according to the identifier of the to-be-positioned communications device by using a short-range wireless communications technology.

In this embodiment, the first communications device determines, according to the received first positioning request message, that the first communications device needs to obtain the position information of the to-be-positioned communications device corresponding to the identifier, so that the first communications device can obtain the position information of the to-be-positioned communications device according to the identifier of the to-be-positioned communications device by using the short-range wireless communications technology. The position information of the to-be-positioned communications device may be longitude information and latitude information of a position of the to-be-positioned communications device; or the position information of the to-be-positioned communications device may be in which building, which street, which district (county), and which city the to-be-positioned communications device is located; the position information of the to-be-positioned communications device may be a relative position of the to-be-positioned communications device with respect to the first communications device; or the like.

In this embodiment, the first communications device may obtain the position information of the to-be-positioned communications device corresponding to the identifier by using the short-range wireless communications technology (for example, WiFi or Bluetooth). That is, when the first communications device finds by means of scanning, by using the short-range wireless communications technology, that the to-be-positioned communications device corresponding to the identifier exists around the first communications device, the first communications device may obtain the position information of the to-be-positioned communications device. For example, position information of the first communications device may be used as the position information of the to-be-positioned communications device.

In a feasible implementation manner, after the first communications device obtains the position information of the to-be-positioned communications device according to the identifier of the to-be-positioned communications device by using the short-range wireless communications technology, the method further includes: storing, by the first communications device, a correspondence between the identifier and the position information that are of the to-be-positioned communications device according to the identifier of the to-be-positioned communications device and the position information of the to-be-positioned communications device; and determining, by the first communications device, the position information of the to-be-positioned communications device from the stored correspondence according to the identifier of the to-be-positioned communications device. In this embodiment, after obtaining the position information of the to-be-positioned communications device according to the identifier of the to-be-positioned communications device by using the short-range wireless communications technology, the first communications device generates the correspondence between the identifier and the position information that are of the to-be-positioned communications device and may store the correspondence between the identifier and the position information that are of the to-be-positioned communications device. When the first communications device stores the correspondence between the identifier and the position information that are of the to-be-positioned communications device, the first communications device may determine, from a stored correspondence between an identifier and position information that are of a communications device, the correspondence between the identifier and the position information that are of the to-be-positioned communications device according to the identifier of the to-be-positioned communications device, and thereby determine the position information of the to-be-positioned communications device.

In this embodiment, a first communications device receives a first positioning request message, where the first positioning request message includes an identifier of a to-be-positioned communications device, and the first positioning request message is used to request position information of the to-be-positioned communications device; and the first communications device obtains the position information of the to-be-positioned communications device according to the identifier of the to-be-positioned communications device by using a short-range wireless communications technology. Therefore, it is implemented that the first communications device can obtain position information of another communications device.

FIG. 2 is a flowchart of a second embodiment of a positioning method according to the present invention. As shown in FIG. 2, the method in this embodiment may include the following steps.

S201. A first communications device receives a position register request message sent by a to-be-positioned communications device, where the position register request includes position information of the to-be-positioned communications device.

S202. The first communications device stores a correspondence between an identifier and the position information that are of the to-be-positioned communications device according to the position register request message.

In this embodiment, the to-be-positioned communications device may send the position register request message to the first communications device, where the position register request message includes the position information of the to-be-positioned communications device, so that the first communications device can receive the position register request message sent by the to-be-positioned communications device; then the first communications device can obtain the position information of the to-be-positioned communications device according to the position register request message, and store the position information of the to-be-positioned communications device, that is, store the correspondence between the identifier and the position information that are of the to-be-positioned communications device.

For example, a holder of the to-be-positioned communications device needs to fly to Shenzhen by plane, and before the plane takes off, the holder may send, by using the to-be-positioned communications device, position information (for example, flying to Shenzhen) to the first communications device (for example, a position management server) by using a position register request message. The first communications device may store information that the holder of the to-be-positioned communications device will fly to Shenzhen.

For example, when the to-be-positioned communications device nearly runs out of power, the to-be-positioned communications device may send position information (for example, being located in a building A) of the to-be-positioned communications device to the first communications device by using a position register request message. The first communications device may store information that the to-be-positioned communications device is located in the building A.

S203. The first communications device receives a first positioning request message, where the first positioning request message includes the identifier of the to-be-positioned communications device, and the first positioning request message is used to request the position information of the to-be-positioned communications device.

S204. The first communications device determines, according to the identifier of the to-be-positioned communications device, the position information of the to-be-positioned communications device from the stored correspondence between the identifier and the position information that are of the to-be-positioned communications device.

In this embodiment, in a feasible implementation manner, the first communications device may receive the first positioning request message entered by a user. For example, when the user needs to obtain the position information of the to-be-positioned communications device, the user may enter an instruction in the first communications device, where the instruction indicates that the position information of the to-be-positioned communications device needs to be obtained. Then the first communications device determines the stored correspondence between the identifier and the position information that are of the to-be-positioned communications device according to the identifier of the to-be-positioned communications device, and thereby determines the position information of the to-be-positioned communications device. Further, the first communications device may display the position information of the to-be-positioned communications device. For example, the position information of the to-be-positioned communications device may be displayed to the user in a textual or graphic manner.

In this embodiment, in another feasible implementation manner, when a user of a second communications device needs to obtain the position information of the to-be-positioned communications device, if the second communications device cannot directly find the to-be-positioned communications device by means of scanning or the second communications device does not store the position information of the to-be-positioned communications device, the first communications device may receive the first positioning request message sent by the second communications device. Then the first communications device determines the stored correspondence between the identifier and the position information that are of the to-be-positioned communications device according to the identifier of the to-be-positioned communications device, and thereby determines the position information of the to-be-positioned communications device. Further, the first communications device may send a first positioning response message to the second communications device, where the first positioning response message includes the position information of the to-be-positioned communications device. Further, the second communications device may display the position information of the to-be-positioned communications device. For example, the position information of the to-be-positioned communications device may be displayed to the user in a textual or graphic manner.

According to this embodiment, a first communications device receives a position register request message sent by a to-be-positioned communications device, where the position register request includes position information of the to-be-positioned communications device; stores a correspondence between an identifier and the position information that are of the to-be-positioned communications device according to the position register request message; receives a first positioning request message, where the first positioning request message includes the identifier of the to-be-positioned communications device, and the first positioning request message is used to request the position information of the to-be-positioned communications device; and determines, according to the identifier of the to-be-positioned communications device, the position information of the to-be-positioned communications device from the stored correspondence between the identifier and the position information that are of the to-be-positioned communications device. Therefore, it is implemented that the first communications device can obtain position information of another communications device.

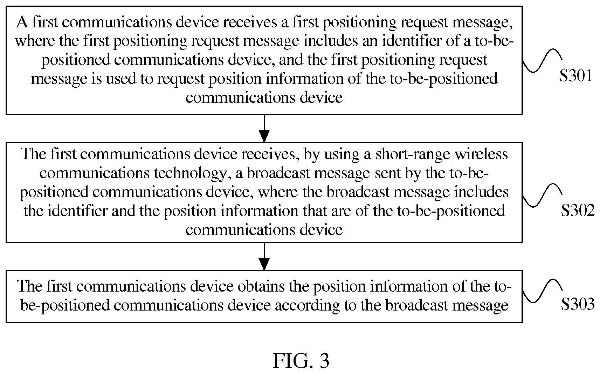

FIG. 3 is a flowchart of a third embodiment of a positioning method according to the present invention. As shown in FIG. 3, the method in this embodiment may include the following steps:
S301. A first communications device receives a first positioning request message, where the first positioning request message includes an identifier of a to-be-positioned communications device, and the first positioning request message is used to request position information of the to-be-positioned communications device.

In this embodiment, the first communications device may receive the first positioning request message entered by a user. Alternatively, the first communications device receives the first positioning request message sent by a second communications device. For a specific implementation process, refer to related records in S203 in the second method embodiment of the present invention. Details are not described herein again.

S302. The first communications device receives, by using a short-range wireless communications technology, a broadcast message sent by the to-be-positioned communications device, where the broadcast message includes the identifier and the position information that are of the to-be-positioned communications device.

S303. The first communications device obtains the position information of the to-be-positioned communications device according to the broadcast message.

In this embodiment, the first communications device may receive, by using the short-range wireless communications technology, the broadcast message sent by the to-be-positioned communications device. Specifically, the to-be-positioned communications device may broadcast the position information to another communications device. When determining, by using the short-range wireless communications technology, that communications devices that support the same short-range wireless communications technology exist in a scanning distance range, the first communications device may receive broadcast messages sent by the communications devices, where the broadcast messages include identifiers and position information that are of the communications devices. When a broadcast message that is sent by a communications device and is received by the first communications device includes the identifier of the to-be-positioned communications device, it may be determined that the communications device is the to-be-positioned communications device, where position information included in the broadcast message is the position information of the to-be-positioned communications device. It should be noted that the scanning distance range of the first communications device is related to the short-range wireless communications technology.

Further, the first communications device in this embodiment includes a display. This embodiment may further include the following: The first communications device may display the position information of the to-be-positioned communications device by using the display; or the first communications device sends a first positioning response message to the second communications device, where the first positioning response message includes the position information of the to-be-positioned communications device.

According to this embodiment, a first communications device receives a first positioning request message, where the first positioning request message includes an identifier of a to-be-positioned communications device, and the first positioning request message is used to request position information of the to-be-positioned communications device; receives, by using a short-range wireless communications technology, a broadcast message sent by the to-be-positioned communications device, where the broadcast message includes the identifier and the position information that are of the to-be-positioned communications device; and thereby obtains the position information of the to-be-positioned communications device. Therefore, it is implemented that the first communications device can obtain position information of another communications device.

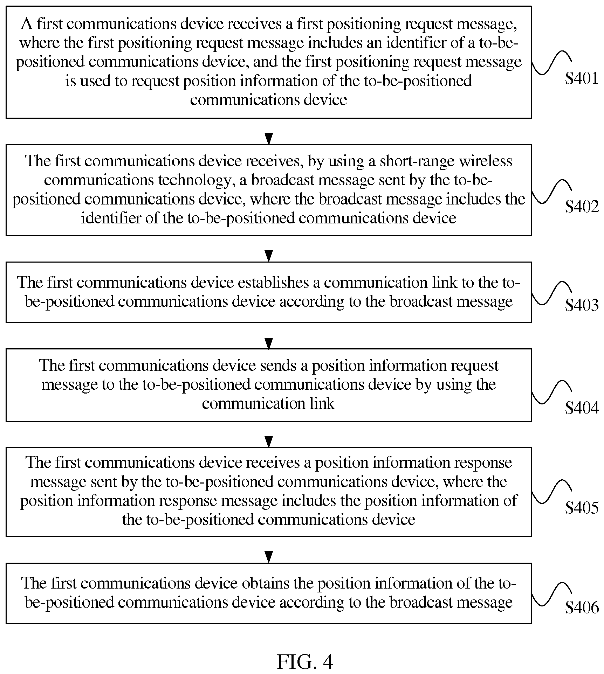

FIG. 4 is a flowchart of a fourth embodiment of a positioning method according to the present invention. As shown in FIG. 4, the method in this embodiment may include the following steps.

S401. A first communications device receives a first positioning request message, where the first positioning request message includes an identifier of a to-be-positioned communications device, and the first positioning request message is used to request position information of the to-be-positioned communications device.

In this embodiment, a specific implementation process of S401 is similar to the specific implementation process of S301 in the third method embodiment of the present invention. For details, refer to related records in the foregoing method embodiment of the present invention. Details are not described herein again.

S402. The first communications device receives, by using a short-range wireless communications technology, a broadcast message sent by the to-be-positioned communications device, where the broadcast message includes the identifier of the to-be-positioned communications device.

S403. The first communications device establishes a communication link to the to-be-positioned communications device according to the broadcast message.

S404. The first communications device sends a position information request message to the to-be-positioned communications device by using the communication link.

S405. The first communications device receives a position information response message sent by the to-be-positioned communications device, where the position information response message includes the position information of the to-be-positioned communications device.

S406. The first communications device obtains the position information of the to-be-positioned communications device according to the broadcast message.

In this embodiment, the first communications device receives, by using the short-range wireless communications technology, the broadcast message sent by the to-be-positioned communications device. Specifically, the to-be-positioned communications device in this embodiment does not send the position information to another communications device by using the broadcast message. When determining, by using the short-range wireless communications technology, that communications devices that support the same short-range wireless communications technology exist in a scanning distance range, the first communications device may receive broadcast messages sent by the communications devices, where the broadcast messages include identifiers of the communications devices. When a broadcast message that is sent by a communications device and is received by the first communications device includes the identifier of the to-be-positioned communications device, it may be determined that the communications device is the to-be-positioned communications device. Then the first communications device establishes a communication link to the to-be-positioned communications device according to preset authentication information, and the first communications device sends a position information request message to the to-be-positioned communications device by using the communication link. After the to-be-positioned communications device receives the position information request message, the to-be-positioned communications device may send its position information to the first communications device by using a position information response message. The first communications device receives the position information response message sent by the to-be-positioned communications device, and obtains the position information of the to-be-positioned communications device from the position information response message.

Further, the first communications device in this embodiment may include a display. This embodiment may further include the following: The first communications device may display the position information of the to-be-positioned communications device by using the display; or the first communications device sends a first positioning response message to a second communications device, where the first positioning response message includes the position information of the to-be-positioned communications device.

According to this embodiment, a first communications device receives a first positioning request message, where the first positioning request message includes an identifier of a to-be-positioned communications device, and the first positioning request message is used to request position information of the to-be-positioned communications device. The first communications device receives, by using a short-range wireless communications technology, a broadcast message sent by the to-be-positioned communications device, where the broadcast message includes the identifier of the to-be-positioned communications device; then establishes a communication link to the to-be-positioned communications device; and obtains the position information of the to-be-positioned communications device from the to-be-positioned communications device. Therefore, it is implemented that the first communications device can obtain position information of another communications device.

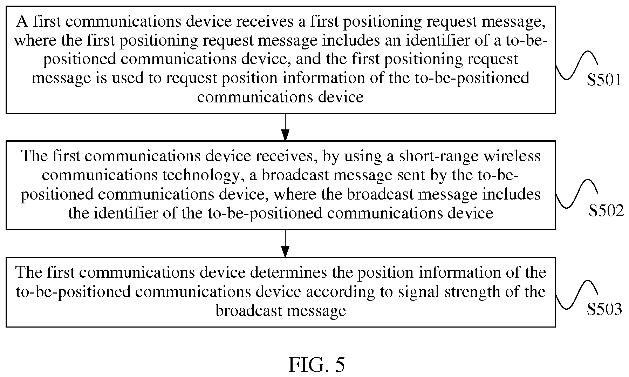

FIG. 5 is a flowchart of a fifth embodiment of a positioning method according to the present invention. As shown in FIG. 5, the method in this embodiment may include the following steps.

S501. A first communications device receives a first positioning request message, where the first positioning request message includes an identifier of a to-be-positioned communications device, and the first positioning request message is used to request position information of the to-be-positioned communications device.

In this embodiment, a specific implementation process of S501 is similar to the specific implementation process of S301 in the third method embodiment of the present invention. For details, refer to related records in the foregoing method embodiment of the present invention. Details are not described herein again.

S502. The first communications device receives, by using a short-range wireless communications technology, a broadcast message sent by the to-be-positioned communications device, where the broadcast message includes the identifier of the to-be-positioned communications device.

S503. The first communications device determines the position information of the to-be-positioned communications device according to signal strength of the broadcast message.

In this embodiment, the first communications device receives, by using the short-range wireless communications technology, the broadcast message sent by the to-be-positioned communications device. Specifically, the to-be-positioned communications device in this embodiment does not send the position information to another communications device by using the broadcast message. When determining, by using the short-range wireless communications technology, that communications devices that support the same short-range wireless communications technology exist in a scanning distance range, the first communications device may receive broadcast messages sent by the communications devices, where the broadcast messages include identifiers of the communications devices. When a broadcast message that is sent by a communications device and is received by the first communications device includes the identifier of the to-be-positioned communications device, it may be determined that the communications device is the to-be-positioned communications device. Then the first communications device may determine the position information of the to-be-positioned communications device according to signal strength of the broadcast message. For example, the broadcast message is attenuated in a transmission process. The first communications device may learn signal strength of the broadcast message sent by the to-be-positioned communications device. At the same time, the first communications device may determine signal strength of the received broadcast message sent by the to-be-positioned communications device. Therefore, according to a difference between signal strength of the broadcast message at a sending point and signal strength of the broadcast message at a receiving point, a distance between the sending point and the receiving point, that is, a distance between the to-be-positioned communications device and the first communications device, may be determined, which increases accuracy of positioning a position of the to-be-positioned communications device by the first communications device. For example, the to-be-positioned communications device is located at a place 5 m away from the first communications device.

The first communications device sends a position information request message to the to-be-positioned communications device by using a communication link. After the to-be-positioned communications device receives the position information request message, the to-be-positioned communications device may send its position information to the first communications device by using a position information response message. The first communications device receives the position information response message sent by the to-be-positioned communications device, and obtains the position information of the to-be-positioned communications device from the position information response message.

Further, the first communications device in this embodiment may include a display. This embodiment may further include the following: The first communications device may display the position information of the to-be-positioned communications device by using the display; or the first communications device sends a first positioning response message to a second communications device, where the first positioning response message includes the position information of the to-be-positioned communications device.

Optionally, after the first communications device determines the position information of the to-be-positioned communications device, this embodiment may further include the following: The first communications device may send the determined position information of the to-be-positioned communications device to the to-be-positioned communications device.

According to this embodiment, a first communications device receives a first positioning request message, where the first positioning request message includes an identifier of a to-be-positioned communications device, and the first positioning request message is used to request position information of the to-be-positioned communications device; receives, by using a short-range wireless communications technology, a broadcast message sent by the to-be-positioned communications device, where the broadcast message includes the identifier the to-be-positioned communications device; and determines the position information of the to-be-positioned communications device according to signal strength of the broadcast message. Therefore, it is implemented that the first communications device can obtain position information of another communications device.

Optionally, in the method embodiment shown in any one of FIG. 3 to FIG. 5, after the first communications device obtains the position information of the to-be-positioned communications device, the first communications device may store the position information of the to-be-positioned communications device, that is, store a correspondence between the identifier and the position information that are of the to-be-positioned communications device. Therefore, when needing to obtain the position information of the to-be-positioned communications device next time, the first communications device may directly obtain the position information of the to-be-positioned communications device from the stored position information without a need to perform scanning within a distance range.

The following describes application scenarios of the method embodiment shown in any one of FIG. 3 to FIG. 5 by using examples, and the present invention is not limited to the following application scenarios.

In a first application scenario, a wife does not need to call a husband by using a mobile phone and can learn whether the husband takes a Bluetooth-enabled key. That is, the wife may send, to a mobile phone of the husband by using the mobile phone, a positioning request message that is used to request position information of the Bluetooth-enabled key. When the mobile phone of the husband finds by means of scanning, by using Bluetooth, that the Bluetooth-enabled key exists in a distance range, the wife may determine that the husband takes the Bluetooth-enabled key.

In a second application scenario, a user may remotely learn whether a Bluetooth-enabled device is in a vehicle. A 3G+Bluetooth apparatus may be mounted in the vehicle. The user may send, to the vehicle by using a mobile phone, a positioning request message that is used to request position information of the Bluetooth-enabled device. When the vehicle finds by means of scanning, by using Bluetooth, that the Bluetooth-enabled device exists in a distance range, the user may determine that the Bluetooth-enabled device is in the vehicle.

In a third application scenario, when a user finds that the user's wallet with a Bluetooth/WiFi sensor is out of sight, whether the wallet is at home may be determined. That is, the user may send, to a gateway device at home by using a mobile phone, a positioning request message that is used to request position information of the wallet with a Bluetooth/WiFi sensor. When the gateway device finds by means of scanning, by using Bluetooth/WiFi, that the wallet with a Bluetooth/WiFi sensor exists in a distance range, the user may determine that the wallet with a Bluetooth/WiFi sensor is at home.

In a fourth application scenario, a user needs to query a position of a mobile phone A. The user may send, to a position management server, a positioning request message that is used to request position information of the mobile phone A. The position management server may send the positioning request message to mobile phones that have registered with the position management server. The registered mobile phones search for the mobile phone A in scanning distance ranges. Therefore, the user may determine the position of the mobile phone A.

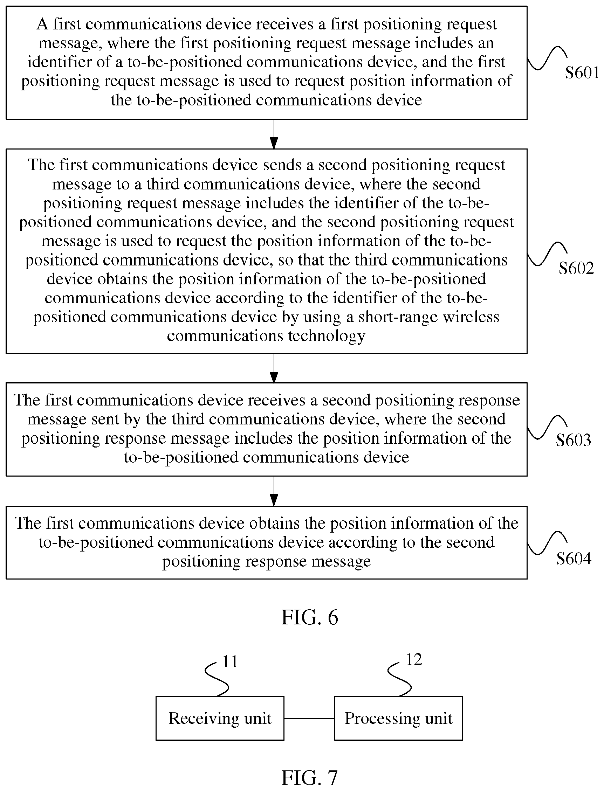

FIG. 6 is a flowchart of a sixth embodiment of a positioning method according to the present invention. As shown in FIG. 6, the method in this embodiment may include the following steps.

S601. A first communications device receives a first positioning request message, where the first positioning request message includes an identifier of a to-be-positioned communications device, and the first positioning request message is used to request position information of the to-be-positioned communications device.

In this embodiment, a specific implementation process of S601 is similar to the specific implementation process of S301 in the third method embodiment of the present invention. For details, refer to related records in the foregoing method embodiment of the present invention. Details are not described herein again.

S602. The first communications device sends a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using a short-range wireless communications technology.

S603. The first communications device receives a second positioning response message sent by the third communications device, where the second positioning response message includes the position information of the to-be-positioned communications device.

S604. The first communications device obtains the position information of the to-be-positioned communications device according to the second positioning response message.

In this embodiment, the first communications device may receive, by using the short-range wireless communications technology, a broadcast message sent by the to-be-positioned communications device. Specifically, when the first communications device determines, by using the short-range wireless communications technology, that the to-be-positioned communications device does not exist in a scanning distance range, the first communications device may send, by using the short-range wireless communications technology, a second positioning request message to the third communications device that supports the same short-range wireless communications technology, or send a second positioning request message to the third communications device by using a long-range wireless communications technology. Therefore, the third communications device may obtain the position information of the to-be-positioned communications device according to the identifier of the to-be-positioned communications device by using the short-range wireless communications technology. For example, the third communications device determines the position information of the to-be-positioned communications device according to a solution of the method embodiment shown in any one of FIG. 1 to FIG. 5; or the third communications device may send, to a fourth communications device, a positioning request message that is used to request the position information of the to-be-positioned communications device; and by analogy (similar to a web crawler), until a communications device determines the position information of the to-be-positioned communications device. Then the position information of the to-be-positioned communications device is returned to the third communications device according to a reverse procedure. Then the third communications device sends, to the first communications device, the position information of the to-be-positioned communications device that is obtained by using the short-range wireless communications technology. Therefore, the first communications device receives the second positioning response message that includes the position information of the to-be-positioned communications device and that is sent by the third communications device.

According to this embodiment, a first communications device receives a first positioning request message, where the first positioning request message includes an identifier of a to-be-positioned communications device, and the first positioning request message is used to request position information of the to-be-positioned communications device; sends a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using a short-range wireless communications technology; receives a second positioning response message sent by the third communications device, where the second positioning response message includes the position information of the to-be-positioned communications device; and thereby obtains the position information of the to-be-positioned communications device. Therefore, it is implemented that the first communications device can obtain position information of another communications device.

FIG. 7 is a schematic structural diagram of a first embodiment of a communications device according to the present invention. As shown in FIG. 7, the communications device in this embodiment may include a receiving unit 11 and a processing unit 12. The receiving unit 11 is configured to receive a first positioning request message, where the first positioning request message includes an identifier of a to-be-positioned communications device, and the first positioning request message is used to request position information of the to-be-positioned communications device. The processing unit 12 is configured to obtain, by using a short-range wireless communications technology, the position information of the to-be-positioned communications device according to the identifier of the to-be-positioned communications device that is included in the first positioning request message received by the receiving unit 11.

The communications device in this embodiment may be used to perform the technical solutions of the foregoing method embodiments of the present invention. Implementation principles and technical effects of the communications device are similar and are not described herein again.

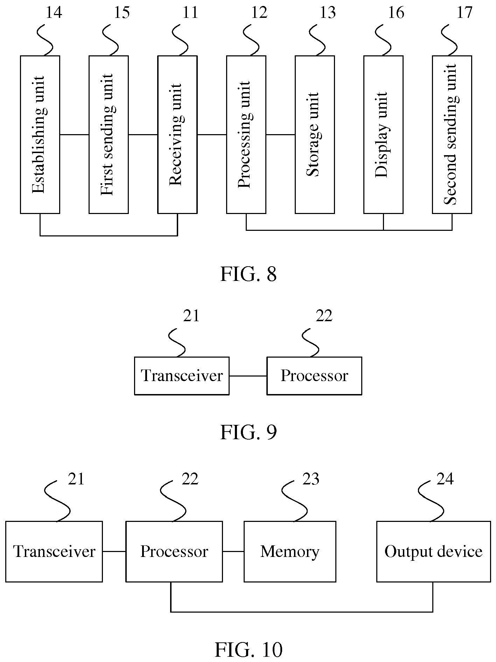

FIG. 8 is a schematic structural diagram of a second embodiment of a communications device according to the present invention. As shown in FIG. 8, the communications device in this embodiment is based on the structure of the communications device shown in FIG. 7. Optionally, the communications device in this embodiment may include a storage unit 13. The storage unit 13 is configured to: after the processing unit 12 obtains, by using the short-range wireless communications technology, the position information of the to-be-positioned communications device according to the identifier of the to-be-positioned communications device that is included in the first positioning request message received by the receiving unit 11, store a correspondence between the identifier and the position information that are of the to-be-positioned communications device according to the identifier of the to-be-positioned communications device and the position information of the to-be-positioned communications device. The processing unit 12 is further configured to determine, according to the identifier of the to-be-positioned communications device, the position information of the to-be-positioned communications device from the correspondence stored in the storage unit 13.

Optionally, the receiving unit 11 is further configured to: before the processing unit 12 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device. The processing unit 12 is specifically configured to obtain the position information of the to-be-positioned communications device according to the broadcast message.

Optionally, the communications device in this embodiment may further include an establishing unit 14 and a first sending unit 15. The receiving unit 11 is further configured to: before the processing unit 12 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The establishing unit 14 is configured to establish a communication link to the to-be-positioned communications device according to the broadcast message received by the receiving unit 11. The first sending unit 15 is configured to send a position information request message to the to-be-positioned communications device by using the communication link established by the establishing unit 14. The receiving unit 11 is further configured to receive a position information response message sent by the to-be-positioned communications device, where the position information response message includes the position information of the to-be-positioned communications device. The processing unit 12 is specifically configured to obtain the position information of the to-be-positioned communications device according to the position information response message.

Optionally, the receiving unit 11 is further configured to: before the processing unit 12 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The processing unit 12 is specifically configured to determine the position information of the to-be-positioned communications device according to signal strength of the broadcast message received by the receiving unit 11.

Optionally, the communications device in this embodiment may further include a first sending unit 15. The first sending unit 15 is configured to: before the processing unit 12 obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology. The receiving unit 11 is further configured to receive a second positioning response message sent by the third communications device, where the second positioning response message includes the position information of the to-be-positioned communications device. The processing unit 12 is specifically configured to obtain the position information of the to-be-positioned communications device according to the second positioning response message received by the receiving unit 11.

Optionally, the communications device in this embodiment may further include a display unit 16. The receiving unit 11 is specifically configured to receive the first positioning request message entered by a user. The display unit 16 is configured to: after the processing unit 12 obtains the position information of the to-be-positioned communications device according to the identifier of the to-be-positioned communications device by using the short-range wireless communications technology, display the position information of the to-be-positioned communications device.

Optionally, the communications device in this embodiment may further include a second sending unit 17. The receiving unit 11 is specifically configured to receive the first positioning request message sent by a second communications device. The second sending unit 17 is configured to: after the processing unit 12 obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

The communications device in this embodiment may be used to perform the technical solutions of the foregoing method embodiments of the present invention. Implementation principles and technical effects of the communications device are similar and are not described herein again.

FIG. 9 is a schematic structural diagram of a third embodiment of a communications device according to the present invention. As shown in FIG. 9, the communications device in this embodiment may include a transceiver 21 and a processor 22. The transceiver 21 is configured to receive a first positioning request message, where the first positioning request message includes an identifier of a to-be-positioned communications device, and the first positioning request message is used to request position information of the to-be-positioned communications device. The processor 22 is configured to obtain, by using a short-range wireless communications technology, the position information of the to-be-positioned communications device according to the identifier of the to-be-positioned communications device that is included in the first positioning request message received by the transceiver 21.

The communications device in this embodiment may be used to perform the technical solutions of the foregoing method embodiments of the present invention. Implementation principles and technical effects of the communications device are similar and are not described herein again.

FIG. 10 is a schematic structural diagram of a fourth embodiment of a communications device according to the present invention. As shown in FIG. 10, the communications device in this embodiment is based on the structure of the communications device shown in FIG. 9. Optionally, the communications device in this embodiment may further include a memory 23. The memory 23 is configured to: after the processor 22 obtains, by using the short-range wireless communications technology, the position information of the to-be-positioned communications device according to the identifier of the to-be-positioned communications device that is included in the first positioning request message received by the transceiver 21, store a correspondence between the identifier and the position information that are of the to-be-positioned communications device according to the identifier of the to-be-positioned communications device and the position information of the to-be-positioned communications device. The processor 22 is further configured to determine, according to the identifier of the to-be-positioned communications device, the position information of the to-be-positioned communications device from the correspondence stored in the memory 23.

Optionally, the transceiver 21 is further configured to: before the processor 22 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier and the position information that are of the to-be-positioned communications device. The processor 22 is specifically configured to obtain the position information of the to-be-positioned communications device according to the broadcast message.

Optionally, the transceiver 21 is further configured to: before the processor 22 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The processor 22 is further configured to establish a communication link to the to-be-positioned communications device according to the broadcast message received by the transceiver 21. The transceiver 21 is further configured to send a position information request message to the to-be-positioned communications device by using the communication link established by the processor 22, and receive a position information response message sent by the to-be-positioned communications device, where the position information response message includes the position information of the to-be-positioned communications device. That the processor 22 obtains the position information of the to-be-positioned communications device according to the identifier of the to-be-positioned communications device by using the short-range wireless communications technology is specifically: the processor 22 obtains the position information of the to-be-positioned communications device according to the position information response message.

Optionally, the transceiver 21 is further configured to: before the processor 22 obtains the position information of the to-be-positioned communications device according to the identifier of the to-be-positioned communications device by using the short-range wireless communications technology, receive, by using the short-range wireless communications technology, a broadcast message sent by the to-be-positioned communications device, where the broadcast message includes the identifier of the to-be-positioned communications device. The processor 22 is specifically configured to determine the position information of the to-be-positioned communications device according to signal strength of the broadcast message received by the transceiver 21.

Optionally, the transceiver 21 is further configured to: before the processor 22 obtains the position information of the to-be-positioned communications device according to the identifier of the to-be-positioned communications device by using the short-range wireless communications technology, send a second positioning request message to a third communications device, where the second positioning request message includes the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and receive a second positioning response message sent by the third communications device, where the second positioning response message includes the position information of the to-be-positioned communications device. The processor 22 is specifically configured to obtain the position information of the to-be-positioned communications device according to the second positioning response message received by the transceiver 21.

Optionally, the communications device in this embodiment may further include an output device 24. The transceiver 21 is specifically configured to receive the first positioning request message entered by a user. The output device 24 is configured to: after the processor 22 obtains the position information of the to-be-positioned communications device according to the identifier of the to-be-positioned communications device by using the short-range wireless communications technology, display the position information of the to-be-positioned communications device. The output device 24 is, for example, a display.

Optionally, that the transceiver 21 receives the first positioning request message is specifically: The transceiver 21 receives the first positioning request message sent by a second communications device. The transceiver 21 is further configured to: after the processor 22 obtains the position information of the to-be-positioned communications device according to the identifier of the to-be-positioned communications device by using the short-range wireless communications technology, send a first positioning response message to the second communications device, where the first positioning response message includes the position information of the to-be-positioned communications device.

The communications device in this embodiment may be used to perform the technical solutions of the foregoing method embodiments of the present invention. Implementation principles and technical effects of the communications device are similar and are not described herein again.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments, without departing from the scope of the technical solutions of the embodiments of the present invention.

## Claims

1. A positioning method, comprising:
receiving (S101), by a first communications device, a first positioning request message, wherein the first positioning request message comprises an identifier of a to-be-positioned communications device, and the first positioning request message is used to request position information of the to-be-positioned communications device;
obtaining (S102), by the first communications device, the position information of the to-be-positioned communications device according to the identifier of the to-be-positioned communications device by using a short-range wireless communications technology;
storing (S202), by the first communications device, a correspondence between the identifier and the obtained position information that are of the to-be-positioned communications device according to the identifier of the to-be-positioned communications device and the position information of the to-be-positioned communications device; and
determining (S204), by the first communications device, updated position information of the to-be-positioned communications device from the stored correspondence according to the identifier of the to-be-positioned communications device,
**characterized in that** the obtained position information of the to-be-positioned communications device includes information sent from the to-be-positioned communications device and indicating that a holder of the to-be-positioned communications device travels to a destination, and the stored correspondence includes the information that the holder travels to the destination.

2. The method according to claim 1, wherein before the obtaining, by the first communications device, the position information of the to-be-positioned communications device according to the identifier of the to-be-positioned communications device by using a short-range wireless communications technology, the method further comprises:
receiving (S302), by the first communications device by using the short-range wireless communications technology, a broadcast message sent by the to-be-positioned communications device, wherein the broadcast message comprises the identifier and the position information that are of the to-be-positioned communications device; and
the obtaining, by the first communications device, the position information of the to-be-positioned communications device according to the identifier of the to-be-positioned communications device by using a short-range wireless communications technology comprises:
obtaining (S303), by the first communications device, the position information of the to-be-positioned communications device according to the broadcast message.

3. The method according to claim 1, wherein before the obtaining, by the first communications device, the position information of the to-be-positioned communications device according to the identifier of the to-be-positioned communications device by using a short-range wireless communications technology, the method further comprises:
receiving (S402), by the first communications device by using the short-range wireless communications technology, a broadcast message sent by the to-be-positioned communications device, wherein the broadcast message comprises the identifier of the to-be-positioned communications device;
establishing (S403), by the first communications device, a communication link to the to-be-positioned communications device according to the broadcast message;
sending (S404), by the first communications device, a position information request message to the to-be-positioned communications device by using the communication link; and
receiving (S405), by the first communications device, a position information response message sent by the to-be-positioned communications device, wherein the position information response message comprises the position information of the to-be-positioned communications device; and
the obtaining, by the first communications device, the position information of the to-be-positioned communications device according to the identifier of the to-be-positioned communications device by using a short-range wireless communications technology comprises:
obtaining (S406), by the first communications device, the position information of the to-be-positioned communications device according to the position information response message.

4. The method according to claim 1, wherein before the obtaining, by the first communications device, the position information of the to-be-positioned communications device according to the identifier of the to-be-positioned communications device by using a short-range wireless communications technology, the method further comprises:
receiving (S502), by the first communications device by using the short-range wireless communications technology, a broadcast message sent by the to-be-positioned communications device, wherein the broadcast message comprises the identifier of the to-be-positioned communications device; and
the obtaining, by the first communications device, the position information of the to-be-positioned communications device according to the identifier of the to-be-positioned communications device by using a short-range wireless communications technology comprises:
determining (S503), by the first communications device, the position information of the to-be-positioned communications device according to signal strength of the broadcast message.

5. The method according to claim 1, wherein before the obtaining, by the first communications device, the position information of the to-be-positioned communications device according to the identifier of the to-be-positioned communications device by using a short-range wireless communications technology, the method further comprises:
sending (S602), by the first communications device, a second positioning request message to a third communications device, wherein the second positioning request message comprises the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and
receiving (S603), by the first communications device, a second positioning response message sent by the third communications device, wherein the second positioning response message comprises the position information of the to-be-positioned communications device; and
the obtaining, by the first communications device, the position information of the to-be-positioned communications device according to the identifier of the to-be-positioned communications device by using a short-range wireless communications technology comprises:
obtaining (S604), by the first communications device, the position information of the to-be-positioned communications device according to the second positioning response message.

6. A communications device, comprising:
a receiving unit (11), configured to receive a first positioning request message, wherein the first positioning request message comprises an identifier of a to-be-positioned communications device, and the first positioning request message is used to request position information of the to-be-positioned communications device;
a processing unit (12), configured to obtain, by using a short-range wireless communications technology, the position information of the to-be-positioned communications device according to the identifier of the to-be-positioned communications device that is comprised in the first positioning request message received by the receiving unit;
a storage unit (13), configured to: after the processing unit obtains, by using the short-range wireless communications technology, the position information of the to-be-positioned communications device according to the identifier of the to-be-positioned communications device that is comprised in the first positioning request message received by the receiving unit, store a correspondence between the identifier and the obtained position information that are of the to-be-positioned communications device according to the identifier of the to-be-positioned communications device and the position information of the to-be-positioned communications device; and
the processing unit (12) is further configured to determine, according to the identifier of the to-be-positioned communications device, updated position information of the to-be-positioned communications device from the correspondence stored in the storage unit,
**characterized in that** the obtained position information of the to-be-positioned communications device includes information sent from the to-be-positioned communications device and indicating that a holder of the to-be-positioned communications device travels to a destination, and the stored correspondence includes the information that the holder travels to the destination.

7. The communications device according to claim 6, wherein the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, wherein the broadcast message comprises the identifier and the position information that are of the to-be-positioned communications device; and the processing unit is specifically configured to obtain the position information of the to-be-positioned communications device according to the broadcast message.

8. The communications device according to claim 6, wherein the communications device further comprises an establishing unit (14) and a first sending unit (15);
the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, wherein the broadcast message comprises the identifier of the to-be-positioned communications device;
the establishing unit is configured to establish a communication link to the to-be-positioned communications device according to the broadcast message received by the receiving unit;
the first sending unit is configured to send a position information request message to the to-be-positioned communications device by using the communication link established by the establishing unit;
the receiving unit is further configured to receive a position information response message sent by the to-be-positioned communications device, wherein the position information response message comprises the position information of the to-be-positioned communications device; and
the processing unit is specifically configured to obtain the position information of the to-be-positioned communications device according to the position information response message.

9. The communications device according to claim 6, wherein the receiving unit is further configured to: before the processing unit obtains the position information of the to-be-positioned communications device according to the identifier of the to-be-positioned communications device by using the short-range wireless communications technology, receive, by using the short-range wireless communications technology, a broadcast message sent by the to-be-positioned communications device, wherein the broadcast message comprises the identifier of the to-be-positioned communications device; and
the processing unit is specifically configured to determine the position information of the to-be-positioned communications device according to signal strength of the broadcast message received by the receiving unit.

10. The communications device according to claim 6, wherein the communications device further comprises:
a first sending unit (15), configured to: before the processing unit obtains the position information of the to-be-positioned communications device according to the identifier of the to-be-positioned communications device by using the short-range wireless communications technology, send a second positioning request message to a third communications device, wherein the second positioning request message comprises the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology;
the receiving unit (11) is further configured to receive a second positioning response message sent by the third communications device, wherein the second positioning response message comprises the position information of the to-be-positioned communications device; and
the processing unit (12) is specifically configured to obtain the position information of the to-be-positioned communications device according to the second positioning response message received by the receiving unit.

11. A computer readable storage medium including instructions which, being executed, perform steps comprising:
receiving (S101), by a first communications device, a first positioning request message, wherein the first positioning request message comprises an identifier of a to-be-positioned communications device, and the first positioning request message is used to request position information of the to-be-positioned communications device;
obtaining (S102), by the first communications device, the position information of the to-be-positioned communications device according to the identifier of the to-be-positioned communications device by using a short-range wireless communications technology;
storing (S202), by the first communications device, a correspondence between the identifier and the obtained position information that are of the to-be-positioned communications device according to the identifier of the to-be-positioned communications device and the position information of the to-be-positioned communications device; and
determining (S204), by the first communications device, updated position information of the to-be-positioned communications device from the stored correspondence according to the identifier of the to-be-positioned communications device,
**characterized in that** the obtained position information of the to-be-positioned communications device includes information sent from the to-be-positioned communications device and indicating that a holder of the to-be-positioned communications device travels to a destination, and the stored correspondence includes the information that the holder travels to the destination.

12. The computer readable storage medium according to claim 11, wherein before the obtaining, by the first communications device, the position information of the to-be-positioned communications device according to the identifier of the to-be-positioned communications device by using a short-range wireless communications technology, the storage medium further comprising instructions which, being executed, perform:
receiving (S302), by the first communications device by using the short-range wireless communications technology, a broadcast message sent by the to-be-positioned communications device, wherein the broadcast message comprises the identifier and the position information that are of the to-be-positioned communications device; and
the obtaining, by the first communications device, the position information of the to-be-positioned communications device according to the identifier of the to-be-positioned communications device by using a short-range wireless communications technology comprises:
obtaining (S303), by the first communications device, the position information of the to-be-positioned communications device according to the broadcast message.

13. The computer readable storage medium according to claim 11, wherein before the obtaining, by the first communications device, the position information of the to-be-positioned communications device according to the identifier of the to-be-positioned communications device by using a short-range wireless communications technology, the storage medium further comprising instructions which, being executed, perform:
receiving (S402), by the first communications device by using the short-range wireless communications technology, a broadcast message sent by the to-be-positioned communications device, wherein the broadcast message comprises the identifier of the to-be-positioned communications device;
establishing (S403), by the first communications device, a communication link to the to-be-positioned communications device according to the broadcast message;
sending (S404), by the first communications device, a position information request message to the to-be-positioned communications device by using the communication link; and
receiving (S405), by the first communications device, a position information response message sent by the to-be-positioned communications device, wherein the position information response message comprises the position information of the to-be-positioned communications device; and
the obtaining, by the first communications device, the position information of the to-be-positioned communications device according to the identifier of the to-be-positioned communications device by using a short-range wireless communications technology comprises:
obtaining (S406), by the first communications device, the position information of the to-be-positioned communications device according to the position information response message.

14. The computer readable storage medium according to claim 11, wherein before the obtaining, by the first communications device, the position information of the to-be-positioned communications device according to the identifier of the to-be-positioned communications device by using a short-range wireless communications technology, the storage medium further comprising instructions which, being executed, perform:
Receiving (S502), by the first communications device by using the short-range wireless communications technology, a broadcast message sent by the to-be-positioned communications device, wherein the broadcast message comprises the identifier of the to-be-positioned communications device; and
the obtaining, by the first communications device, the position information of the to-be-positioned communications device according to the identifier of the to-be-positioned communications device by using a short-range wireless communications technology comprises:
determining (S503), by the first communications device, the position information of the to-be-positioned communications device according to signal strength of the broadcast message.

15. The computer readable storage medium according to claim 11, wherein before the obtaining, by the first communications device, the position information of the to-be-positioned communications device according to the identifier of the to-be-positioned communications device by using a short-range wireless communications technology, the storage medium further comprising instructions which, being executed, perform:
sending (S602), by the first communications device, a second positioning request message to a third communications device, wherein the second positioning request message comprises the identifier of the to-be-positioned communications device, and the second positioning request message is used to request the position information of the to-be-positioned communications device, so that the third communications device obtains the position information of the to-be-positioned communications device according to the identifier of the to-be-positioned communications device by using the short-range wireless communications technology; and
receiving (S603), by the first communications device, a second positioning response message sent by the third communications device, wherein the second positioning response message comprises the position information of the to-be-positioned communications device; and
the obtaining, by the first communications device, the position information of the to-be-positioned communications device according to the identifier of the to-be-positioned communications device by using a short-range wireless communications technology comprises:
obtaining (S604), by the first communications device, the position information of the to-be-positioned communications device according to the second positioning response message.

## Patentansprüche

1. Positionierungsverfahren, umfassend:
Empfangen (S101) einer ersten Positionieranforderungsnachricht durch eine erste Kommunikationseinrichtung, wobei die erste Positionieranforderungsnachricht eine Kennung einer zu positionierenden Kommunikationseinrichtung umfasst und die erste Positionieranforderungsnachricht verwendet wird, um Positionsinformation der zu positionierenden Kommunikationseinrichtung anzufordern;
Erhalten (S102) der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie;
Speichern (S202) einer Entsprechung zwischen der Kennung und der erhaltenen Positionsinformation, die sich auf die zu positionierende Kommunikationseinrichtung beziehen, durch die erste Kommunikationseinrichtung entsprechend der Kennung der zu positionierenden Kommunikationseinrichtung und der Positionsinformation der zu positionierenden Kommunikationseinrichtung; und
Ermitteln (S204) aktualisierter Positionsinformation der zu positionierenden Kommunikationseinrichtung durch die erste Kommunikationseinrichtung aus der entsprechend der Kennung der zu positionierenden Kommunikationseinrichtung gespeicherten Entsprechung,
**dadurch gekennzeichnet, dass** die erhaltene Positionsinformation der zu positionierenden Kommunikationseinrichtung von der zu positionierenden Kommunikationseinrichtung gesendete Information aufweist, die angibt, dass sich ein Inhaber der zu positionierenden Kommunikationseinrichtung zu einem Ziel bewegt, und die gespeicherte Entsprechung die Information aufweist, dass sich der Inhaber zu dem Ziel bewegt.

2. Verfahren nach Anspruch 1, wobei das Verfahren vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner umfasst:
Empfangen (S302), durch die erste Kommunikationseinrichtung, einer durch die zu positionierende Kommunikationseinrichtung unter Verwendung der drahtlosen Kurzbereichskommunikationstechnologie gesendeten Broadcast-Nachricht, wobei die Broadcast-Nachricht die Kennung und die Positionsinformation umfasst, die sich auf die zu positionierende Kommunikationseinrichtung beziehen; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Erhalten (S303) der Positionsinformation der zu positionierenden Kommunikationseinrichtung durch die erste Kommunikationseinrichtung entsprechend der Broadcast-Nachricht.

3. Verfahren nach Anspruch 1, wobei das Verfahren vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner umfasst:
Empfangen (S402) einer durch die zu positionierende Kommunikationseinrichtung gesendeten Broadcast-Nachricht durch die erste Kommunikationseinrichtung unter Verwendung der drahtlosen Kurzbereichskommunikationstechnologie, wobei die Broadcast-Nachricht die Kennung der zu positionierenden Kommunikationseinrichtung umfasst;
Aufbauen (S403) einer Kommunikationsverbindung zu der zu positionierenden Kommunikationseinrichtung durch die erste Kommunikationseinrichtung entsprechend der Broadcast-Nachricht;
Senden (S404) einer Positionsinformationsanforderungsnachricht durch die erste Kommunikationseinrichtung zu der zu positionierenden Kommunikationseinrichtung unter Verwendung der Kommunikationsverbindung; und
Empfangen (S405), durch die erste Kommunikationseinrichtung, einer durch die zu positionierende Kommunikationseinrichtung gesendeten Positionsinformationsantwortnachricht, wobei die Positionsinformationsantwortnachricht die Positionsinformation der zu positionierenden Kommunikationseinrichtung umfasst; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Erhalten (S406) der Positionsinformation der zu positionierenden Kommunikationseinrichtung durch die erste Kommunikationseinrichtung entsprechend der Positionsinformationsantwortnachricht.

4. Verfahren nach Anspruch 1, wobei das Verfahren vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner umfasst:
Empfangen (S502) einer durch die zu positionierende Kommunikationseinrichtung gesendeten Broadcast-Nachricht durch die erste Kommunikationseinrichtung unter Verwendung der drahtlosen Kurzbereichskommunikationstechnologie, wobei die Broadcast-Nachricht die Kennung der zu positionierenden Kommunikationseinrichtung umfasst; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Ermitteln (S503) der Positionsinformation der zu positionierenden Kommunikationseinrichtung durch die erste Kommunikationseinrichtung entsprechend der Signalstärke der Broadcast-Nachricht.

5. Verfahren nach Anspruch 1, wobei das Verfahren vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner umfasst:
Senden (S602) einer zweiten Positionieranforderungsnachricht durch die erste Kommunikationseinrichtung zu einer dritten Kommunikationseinrichtung, wobei die zweite Positionieranforderungsnachricht die Kennung der zu positionierenden Kommunikationseinrichtung umfasst und die zweite Positionieranforderungsnachricht verwendet wird, um die Positionsinformation der zu positionierenden Kommunikationseinrichtung anzufordern, sodass die dritte Kommunikationseinrichtung die Positionsinformation der zu positionierenden Kommunikationseinrichtung entsprechend der Kennung der zu positionierenden Kommunikationseinrichtung unter Verwendung der drahtlosen Kurzbereichskommunikationstechnologie erhält; und
Empfangen (S603) einer durch die dritte Kommunikationseinrichtung gesendeten zweiten Positionierungsantwortnachricht durch die erste Kommunikationseinrichtung, wobei die zweite Positionierungsantwortnachricht die Positionsinformation der zu positionierenden Kommunikationseinrichtung umfasst; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Erhalten (S604) der Positionsinformation der zu positionierenden Kommunikationseinrichtung durch die erste Kommunikationseinrichtung entsprechend der zweiten Positionierungsantwortnachricht.

6. Kommunikationseinrichtung, umfassend:
eine Empfangseinheit (11), ausgelegt zum Empfangen einer ersten Positionieranforderungsnachricht, wobei die erste Positionieranforderungsnachricht eine Kennung einer zu positionierenden Kommunikationseinrichtung umfasst und die erste Positionieranforderungsnachricht verwendet wird, um Positionsinformation der zu positionierenden Kommunikationseinrichtung anzufordern;
eine Verarbeitungseinheit (12), ausgelegt zum Erhalten der Positionsinformation der zu positionierenden Kommunikationseinrichtung entsprechend der Kennung der zu positionierenden Kommunikationseinrichtung, die in der von der Empfangseinheit empfangenen ersten Positionieranforderungsnachricht umfasst ist, unter Verwendung einer drahtlosen Kurzbereichskommunikationstechnologie;
eine Speichereinheit (13), dafür ausgelegt, nach dem Erhalten der Positionsinformation der zu positionierenden Kommunikationseinrichtung entsprechend der Kennung der zu positionierenden Kommunikationseinrichtung, die in der von der Empfangseinheit empfangenen ersten Positionieranforderungsnachricht umfasst ist, unter Verwendung der drahtlosen Kurzbereichskommunikationstechnologie eine Entsprechung zwischen der Kennung und der erhaltenen Positionsinformation, die sich auf die zu positionierende Kommunikationseinrichtung beziehen, entsprechend der Kennung der zu positionierenden Kommunikationseinrichtung und der Positionsinformation der zu positionierenden Kommunikationseinrichtung zu speichern; und
die Verarbeitungseinheit (12) ferner dafür ausgelegt ist, entsprechend der Kennung der zu positionierenden Kommunikationseinrichtung aktualisierte Positionsinformation der zu positionierenden Kommunikationseinrichtung aus der in der Speichereinheit gespeicherten Entsprechung zu ermitteln,
**dadurch gekennzeichnet, dass** die erhaltene Positionsinformation der zu positionierenden Kommunikationseinrichtung von der zu positionierenden Kommunikationseinrichtung gesendete Information aufweist, die angibt, dass sich ein Inhaber der zu positionierenden Kommunikationseinrichtung zu einem Ziel bewegt, und die gespeicherte Entsprechung die Information aufweist, dass sich der Inhaber zu dem Ziel bewegt.

7. Kommunikationseinrichtung nach Anspruch 6, wobei die Empfangseinheit ferner dafür ausgelegt ist, bevor die Verarbeitungseinheit die Positionsinformation der zu positionierenden Kommunikationseinrichtung entsprechend der Kennung der zu positionierenden Kommunikationseinrichtung unter Verwendung der drahtlosen Kurzbereichskommunikationstechnologie erhält, unter Verwendung der drahtlosen Kurzbereichskommunikationstechnologie eine durch die zu positionierende Kommunikationseinrichtung gesendete Broadcast-Nachricht zu empfangen, wobei die Broadcast-Nachricht die Kennung und die Positionsinformation umfasst, die sich auf die zu positionierende Kommunikationseinrichtung beziehen; und
die Verarbeitungseinheit im Einzelnen dafür ausgelegt ist, die Positionsinformation der zu positionierenden Kommunikationseinrichtung entsprechend der Broadcast-Nachricht zu erhalten.

8. Kommunikationseinrichtung nach Anspruch 6, wobei die Kommunikationseinrichtung ferner eine Aufbaueinheit (14) und eine erste Sendeeinheit (15) umfasst;
die Empfangseinheit ferner dafür ausgelegt ist, bevor die Verarbeitungseinheit die Positionsinformation der zu positionierenden Kommunikationseinrichtung entsprechend der Kennung der zu positionierenden Kommunikationseinrichtung unter Verwendung der drahtlosen Kurzbereichskommunikationstechnologie erhält, unter Verwendung der drahtlosen Kurzbereichskommunikationstechnologie eine durch die zu positionierende Kommunikationseinrichtung gesendete Broadcast-Nachricht zu empfangen, wobei die Broadcast-Nachricht die Kennung der zu positionierenden Kommunikationseinrichtung umfasst;
die Aufbaueinheit dafür ausgelegt ist, eine Kommunikationsverbindung zu der zu positionierenden Kommunikationseinrichtung entsprechend der von der Empfangseinheit empfangenen Broadcast-Nachricht aufzubauen;
die erste Sendeeinheit dafür ausgelegt ist, eine Positionsinformationsanforderungsnachricht zu der zu positionierenden Kommunikationseinrichtung unter Verwendung der durch die Aufbaueinheit aufgebauten Kommunikationsverbindung zu senden;
die Empfangseinheit ferner dafür ausgelegt ist, eine von der zu positionierenden Kommunikationseinrichtung gesendete Positionsinformationsantwortnachricht zu empfangen, wobei die Positionsinformationsantwortnachricht die Positionsinformation der zu positionierenden Kommunikationseinrichtung umfasst; und
die Verarbeitungseinheit im Einzelnen dafür ausgelegt ist, die Positionsinformation der zu positionierenden Kommunikationseinrichtung entsprechend der Positionsinformationsantwortnachricht zu erhalten.

9. Kommunikationseinrichtung nach Anspruch 6, wobei die Empfangseinheit ferner dafür ausgelegt ist, bevor die Verarbeitungseinheit die Positionsinformation der zu positionierenden Kommunikationseinrichtung entsprechend der Kennung der zu positionierenden Kommunikationseinrichtung unter Verwendung der drahtlosen Kurzbereichskommunikationstechnologie erhält, unter Verwendung der drahtlosen Kurzbereichskommunikationstechnologie eine durch die zu positionierende Kommunikationseinrichtung gesendete Broadcast-Nachricht zu empfangen, wobei die Broadcast-Nachricht die Kennung der zu positionierenden Kommunikationseinrichtung umfasst; und
die Verarbeitungseinheit im Einzelnen dafür ausgelegt ist, die Positionsinformation der zu positionierenden Kommunikationseinrichtung entsprechend der Signalstärke der von der Empfangseinheit empfangenen Broadcast-Nachricht zu ermitteln.

10. Kommunikationseinrichtung nach Anspruch 6, wobei die Kommunikationseinrichtung ferner umfasst:
eine erste Sendeeinheit (15), dafür ausgelegt, bevor die Verarbeitungseinheit die Positionsinformation der zu positionierenden Kommunikationseinrichtung entsprechend der Kennung der zu positionierenden Kommunikationseinrichtung unter Verwendung der drahtlosen Kurzbereichskommunikationstechnologie erhält, eine zweite Positionieranforderungsnachricht zu einer dritten Kommunikationseinrichtung zu senden, wobei die zweite Positionieranforderungsnachricht die Kennung der zu positionierenden Kommunikationseinrichtung umfasst und die zweite Positionieranforderungsnachricht verwendet wird, um die Positionsinformation der zu positionierenden Kommunikationseinrichtung anzufordern, sodass die dritte Kommunikationseinrichtung die Positionsinformation der zu positionierenden Kommunikationseinrichtung entsprechend der Kennung der zu positionierenden Kommunikationseinrichtung unter Verwendung der drahtlosen Kurzbereichskommunikationstechnologie erhält;
die Empfangseinheit (11) ferner ausgelegt ist zum Empfangen einer zweiten, durch die dritte Kommunikationseinrichtung gesendeten Positionierungsantwortnachricht, wobei die zweite Positionierungsantwortnachricht die Positionsinformation der zu positionierenden Kommunikationseinrichtung umfasst; und
die Verarbeitungseinheit (12) im Einzelnen ausgelegt ist zum Erhalten der Positionsinformation der zu positionierenden Kommunikationseinrichtung entsprechend der zweiten, durch die Empfangseinheit empfangenen Positionierungsantwortnachricht.

11. Rechnerlesbares Speichermedium, aufweisend Anweisungen, die bei der Ausführung Schritte durchführen, umfassend:
Empfangen (S101) einer ersten Positionieranforderungsnachricht durch eine erste Kommunikationseinrichtung, wobei die erste Positionieranforderungsnachricht eine Kennung einer zu positionierenden Kommunikationseinrichtung umfasst und die erste Positionieranforderungsnachricht verwendet wird, um Positionsinformation der zu positionierenden Kommunikationseinrichtung anzufordern;
Erhalten (S102) der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie;
Speichern (S202) einer Entsprechung zwischen der Kennung und der erhaltenen Positionsinformation, die sich auf die zu positionierende Kommunikationseinrichtung beziehen, durch die erste Kommunikationseinrichtung entsprechend der Kennung der zu positionierenden Kommunikationseinrichtung und der Positionsinformation der zu positionierenden Kommunikationseinrichtung; und
Ermitteln (S204) aktualisierter Positionsinformation der zu positionierenden Kommunikationseinrichtung durch die erste Kommunikationseinrichtung aus der entsprechend der Kennung der zu positionierenden Kommunikationseinrichtung gespeicherten Entsprechung,
**dadurch gekennzeichnet, dass** die erhaltene Positionsinformation der zu positionierenden Kommunikationseinrichtung von der zu positionierenden Kommunikationseinrichtung gesendete Information aufweist, die angibt, dass sich ein Inhaber der zu positionierenden Kommunikationseinrichtung zu einem Ziel bewegt, und die gespeicherte Entsprechung die Information aufweist, dass sich der Inhaber zu dem Ziel bewegt.

12. Rechnerlesbares Speichermedium nach Anspruch 11, wobei das Speichermedium vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner Anweisungen umfasst, die bei Ausführung durchführen:
Empfangen (S302), durch die erste Kommunikationseinrichtung unter Verwendung der drahtlosen Kurzbereichskommunikationstechnologie, einer durch die zu positionierende Kommunikationseinrichtung gesendeten Broadcast-Nachricht, wobei die Broadcast-Nachricht die Kennung und die Positionsinformation umfasst, die sich auf die zu positionierende Kommunikationseinrichtung beziehen; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Erhalten (S303) der Positionsinformation der zu positionierenden Kommunikationseinrichtung durch die erste Kommunikationseinrichtung entsprechend der Broadcast-Nachricht.

13. Rechnerlesbares Speichermedium nach Anspruch 11, wobei das Speichermedium vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner Anweisungen umfasst, die bei Ausführung durchführen:
Empfangen (S402) einer durch die zu positionierende Kommunikationseinrichtung gesendeten Broadcast-Nachricht durch die erste Kommunikationseinrichtung unter Verwendung der drahtlosen Kurzbereichskommunikationstechnologie, wobei die Broadcast-Nachricht die Kennung der zu positionierenden Kommunikationseinrichtung umfasst;
Aufbauen (S403) einer Kommunikationsverbindung zu der zu positionierenden Kommunikationseinrichtung durch die erste Kommunikationseinrichtung entsprechend der Broadcast-Nachricht;
Senden (S404) einer Positionsinformationsanforderungsnachricht durch die erste Kommunikationseinrichtung zu der zu positionierenden Kommunikationseinrichtung unter Verwendung der Kommunikationsverbindung; und
Empfangen (S405), durch die erste Kommunikationseinrichtung, einer durch die zu positionierende Kommunikationseinrichtung gesendeten Positionsinformationsantwortnachricht, wobei die Positionsinformationsantwortnachricht die Positionsinformation der zu positionierenden Kommunikationseinrichtung umfasst; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Erhalten (S406) der Positionsinformation der zu positionierenden Kommunikationseinrichtung durch die erste Kommunikationseinrichtung entsprechend der Positionsinformationsantwortnachricht.

14. Rechnerlesbares Speichermedium nach Anspruch 11, wobei das Speichermedium vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner Anweisungen umfasst, die bei Ausführung durchführen:
Empfangen (S502) einer durch die zu positionierende Kommunikationseinrichtung gesendeten Broadcast-Nachricht durch die erste Kommunikationseinrichtung unter Verwendung der drahtlosen Kurzbereichskommunikationstechnologie, wobei die Broadcast-Nachricht die Kennung der zu positionierenden Kommunikationseinrichtung umfasst; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Ermitteln (S503) der Positionsinformation der zu positionierenden Kommunikationseinrichtung durch die erste Kommunikationseinrichtung entsprechend der Signalstärke der Broadcast-Nachricht.

15. Rechnerlesbares Speichermedium nach Anspruch 11, wobei das Speichermedium vor dem Erhalten der Positionsinformation der zu positionierenden Kommunikationseinrichtung durch die erste Kommunikationseinrichtung entsprechend der Kennung der zu positionierenden Kommunikationseinrichtung unter Verwendung einer drahtlosen Kurzbereichskommunikationstechnologie ferner Anweisungen umfasst, die bei Ausführung durchführen:
Senden (S602) einer zweiten Positionieranforderungsnachricht durch die erste Kommunikationseinrichtung zu einer dritten Kommunikationseinrichtung, wobei die zweite Positionieranforderungsnachricht die Kennung der zu positionierenden Kommunikationseinrichtung umfasst und die zweite Positionieranforderungsnachricht verwendet wird, um die Positionsinformation der zu positionierenden Kommunikationseinrichtung anzufordern, sodass die dritte Kommunikationseinrichtung die Positionsinformation der zu positionierenden Kommunikationseinrichtung entsprechend der Kennung der zu positionierenden Kommunikationseinrichtung unter Verwendung der drahtlosen Kurzbereichskommunikationstechnologie erhält; und
Empfangen (S603) einer durch die dritte Kommunikationseinrichtung gesendeten zweiten Positionierungsantwortnachricht durch die erste Kommunikationseinrichtung, wobei die zweite Positionierungsantwortnachricht die Positionsinformation der zu positionierenden Kommunikationseinrichtung umfasst; und
das Erhalten der Positionsinformation der zu positionierenden Kommunikationseinrichtung entsprechend der Kennung der zu positionierenden Kommunikationseinrichtung durch die erste Kommunikationseinrichtung unter Verwendung einer drahtlosen Kurzbereichskommunikationstechnologie umfasst:
Erhalten (S604) der Positionsinformation der zu positionierenden Kommunikationseinrichtung durch die erste Kommunikationseinrichtung entsprechend der zweiten Positionierungsantwortnachricht.

## Revendications

1. Procédé de positionnement, comprenant :
la réception (S101), par un premier dispositif de communication, d'un premier message de requête de positionnement, le premier message de requête de positionnement comprenant un identificateur d'un dispositif de communication à positionner, et le premier message de requête de positionnement étant utilisé pour demander des informations d'emplacement du dispositif de communication à positionner ;
l'obtention (S102), par le premier dispositif de communication, des informations d'emplacement du dispositif de communication à positionner en fonction de l'identificateur du dispositif de communication à positionner en utilisant une technologie de communication sans fil à courte portée ;
le stockage (S202), par le premier dispositif de communication, d'une correspondance entre l'identificateur et les informations d'emplacement obtenues qui sont du dispositif de communication à positionner en fonction de l'identificateur du dispositif de communication à positionner et les informations d'emplacement du dispositif de communication à positionner ; et
la détermination (S204), par le premier dispositif de communication, des informations d'emplacement actualisées du dispositif de communication à positionner à partir de la correspondance stockée en fonction de l'identificateur du dispositif de communication à positionner,
**caractérisé en ce que** les informations d'emplacement obtenues du dispositif de communication à positionner comprennent des informations envoyées à partir du dispositif de communication à positionner et indiquant qu'un support du dispositif de communication à positionner se déplace vers une destination, et la correspondance stockée comprend les informations que le support se déplace vers la destination.

2. Procédé selon la revendication 1, avant l'obtention, par le premier dispositif de communication, des informations d'emplacement du dispositif de communication à positionner en fonction de l'identificateur du dispositif de communication à positionner en utilisant une technologie de communication sans fil à courte portée, le procédé comprenant en outre :
la réception (S302), par le premier dispositif de communication en utilisant la technologie de communication sans fil à courte portée, d'un message diffusé envoyé par le dispositif de communication à positionner, le message diffusé comprenant l'identificateur et les informations d'emplacement qui sont du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
l'obtention (S303), par le premier dispositif de communication, des informations d'emplacement du dispositif de communication à positionner en fonction du message diffusé.

3. Procédé selon la revendication 1, avant l'obtention, par le premier dispositif de communication, des informations d'emplacement du dispositif de communication à positionner en fonction de l'identificateur du dispositif de communication à positionner en utilisant une technologie de communication sans fil à courte portée, le procédé comprenant en outre :
la réception (S402), par le premier dispositif de communication en utilisant la technologie de communication sans fil à courte portée, d'un message diffusé envoyé par le dispositif de communication à positionner, le message diffusé comprenant l'identificateur du dispositif de communication à positionner ;
l'établissement (S403), par le premier dispositif de communication, d'une liaison de communication vers le dispositif de communication à positionner en fonction du message diffusé ;
l'envoi (S404), par le premier dispositif de communication, d'un message de requête d'informations d'emplacement au dispositif de communication à positionner en utilisant la liaison de communication ; et
la réception (S405), par le premier dispositif de communication, d'un message de réponse d'informations d'emplacement envoyé par le dispositif de communication à positionner, le message de réponse d'informations d'emplacement comprenant les informations d'emplacement du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
l'obtention (S406), par le premier dispositif de communication, des informations d'emplacement du dispositif de communication à positionner en fonction du message de réponse d'informations d'emplacement.

4. Procédé selon la revendication 1, avant l'obtention, par le premier dispositif de communication, des informations d'emplacement du dispositif de communication à positionner en fonction de l'identificateur du dispositif de communication à positionner en utilisant une technologie de communication sans fil à courte portée, le procédé comprenant en outre :
la réception (S502), par le premier dispositif de communication en utilisant la technologie de communication sans fil à courte portée, d'un message diffusé envoyé par le dispositif de communication à positionner, le message diffusé comprenant l'identificateur du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
la détermination (S503), par le premier dispositif de communication, des informations d'emplacement du dispositif de communication à positionner en fonction de l'intensité du signal du message diffusé.

5. Procédé selon la revendication 1, avant l'obtention, par le premier dispositif de communication, des informations d'emplacement du dispositif de communication à positionner en fonction de l'identificateur du dispositif de communication à positionner en utilisant une technologie de communication sans fil à courte portée, le procédé comprenant en outre :
l'envoi (S602), par le premier dispositif de communication, d'un deuxième message de requête de positionnement à un troisième dispositif de communication, le deuxième message de requête de positionnement comprenant l'identificateur du dispositif de communication à positionner, et le deuxième message de requête de positionnement étant utilisé pour demander les informations d'emplacement du dispositif de communication à positionner, de sorte que le troisième dispositif de communication obtient les informations d'emplacement du dispositif de communication à positionner en fonction de l'identificateur du dispositif de communication à positionner en utilisant la technologie de communication sans fil à courte portée ; et
la réception (S603), par le premier dispositif de communication, d'un deuxième message de réponse de positionnement envoyé par le troisième dispositif de communication, le deuxième message de réponse de positionnement comprenant les informations d'emplacement du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
l'obtention (S604), par le premier dispositif de communication, des informations d'emplacement du dispositif de communication à positionner en fonction du deuxième message de réponse de positionnement.

6. Dispositif de communication, comprenant :
une unité de réception (11), configurée pour recevoir un premier message de requête de positionnement, le premier message de requête de positionnement comprenant un identificateur d'un dispositif de communication à positionner, et le premier message de requête de positionnement étant utilisé pour demander des informations d'emplacement du dispositif de communication à positionner ;
une unité de traitement (12), configurée pour obtenir, en utilisant une technologie de communication sans fil à courte portée, les informations d'emplacement du dispositif de communication à positionner en fonction de l'identificateur du dispositif de communication à positionner qui est compris dans le premier message de requête de positionnement reçu par l'unité de réception ;
une unité de stockage (13), configurée pour : après que l'unité de traitement a obtenu, en utilisant la technologie de communication sans fil à courte portée, les informations d'emplacement du dispositif de communication à positionner en fonction de l'identificateur du dispositif de communication à positionner qui est compris dans le premier message de requête de positionnement reçu par l'unité de réception, stocker une correspondance entre l'identificateur et les informations d'emplacement obtenues qui sont du dispositif de communication à positionner en fonction de l'identificateur du dispositif de communication à positionner et les informations d'emplacement du dispositif de communication à positionner ; et
l'unité de traitement (12) étant en outre configurée pour déterminer, en fonction de l'identificateur du dispositif de communication à positionner, des informations d'emplacement actualisées du dispositif de communication à positionner à partir de la correspondance stockée dans l'unité de stockage,
**caractérisé en ce que** les informations d'emplacement obtenues du dispositif de communication à positionner comprennent des informations envoyées à partir du dispositif de communication à positionner et indiquant qu'un support du dispositif de communication à positionner se déplace vers une destination, et la correspondance stockée comprend les informations que le support se déplace vers la destination.

7. Dispositif de communication selon la revendication 6, l'unité de réception étant en outre configurée pour : avant que l'unité de traitement n'obtienne les informations d'emplacement du dispositif de communication à positionner en fonction de l'identificateur du dispositif de communication à positionner en utilisant la technologie de communication sans fil à courte portée, recevoir, en utilisant la technologie de communication sans fil à courte portée, un message diffusé envoyé par le dispositif de communication à positionner, le message diffusé comprenant l'identificateur et les informations d'emplacement qui sont du dispositif de communication à positionner ; et
l'unité de traitement étant configurée spécifiquement pour obtenir les informations d'emplacement du dispositif de communication à positionner en fonction du message diffusé.

8. Dispositif de communication selon la revendication 6, le dispositif de communication comprenant en outre une unité d'établissement (14) et une première unité d'envoi (15) ;
l'unité de réception étant en outre configurée pour : avant que l'unité de traitement n'obtienne les informations d'emplacement du dispositif de communication à positionner en fonction de l'identificateur du dispositif de communication à positionner en utilisant la technologie de communication sans fil à courte portée, recevoir, en utilisant la technologie de communication sans fil à courte portée, un message diffusé envoyé par le dispositif de communication à positionner, le message diffusé comprenant l'identificateur du dispositif de communication à positionner ; l'unité d'établissement étant configurée pour établir une liaison de communication vers le dispositif de communication à positionner en fonction du message diffusé reçu par l'unité de réception ;
la première unité d'envoi étant configurée pour envoyer un message de requête d'informations d'emplacement au dispositif de communication à positionner en utilisant la liaison de communication établie par l'unité d'établissement ;
l'unité de réception étant en outre configurée pour recevoir un message de réponse d'informations d'emplacement envoyé par le dispositif de communication à positionner, le message de réponse d'informations d'emplacement comprenant les informations d'emplacement du dispositif de communication à positionner ; et l'unité de traitement étant configurée spécifiquement pour obtenir les informations d'emplacement du dispositif de communication à positionner en fonction du message de réponse d'informations d'emplacement.

9. Dispositif de communication selon la revendication 6, l'unité de réception étant en outre configurée pour :
avant que l'unité de traitement n'obtienne les informations d'emplacement du dispositif de communication à positionner en fonction de l'identificateur du dispositif de communication à positionner en utilisant la technologie de communication sans fil à courte portée, recevoir, en utilisant la technologie de communication sans fil à courte portée, un message diffusé envoyé par le dispositif de communication à positionner, le message diffusé comprenant l'identificateur du dispositif de communication à positionner ; et
l'unité de traitement étant configurée spécifiquement pour déterminer les informations d'emplacement du dispositif de communication à positionner en fonction de l'intensité du signal du message diffusé reçu par l'unité de réception.

10. Dispositif de communication selon la revendication 6, le dispositif de communication comprenant en outre :
une première unité d'envoi (15), configurée pour : avant que l'unité de traitement n'obtienne les informations d'emplacement du dispositif de communication à positionner en fonction de l'identificateur du dispositif de communication à positionner en utilisant la technologie de communication sans fil à courte portée, envoyer un deuxième message de requête de positionnement à un troisième dispositif de communication, le deuxième message de requête de positionnement comprenant l'identificateur du dispositif de communication à positionner, et le deuxième message de requête de positionnement étant utilisé pour demander les informations d'emplacement du dispositif de communication à positionner, de sorte que le troisième dispositif de communication obtient les informations d'emplacement du dispositif de communication à positionner en fonction de l'identificateur du dispositif de communication à positionner en utilisant la technologie de communication sans fil à courte portée ;
l'unité de réception (11) étant en outre configurée pour recevoir un deuxième message de réponse de positionnement envoyé par le troisième dispositif de communication, le deuxième message de réponse de positionnement comprenant les informations d'emplacement du dispositif de communication à positionner ; et
l'unité de traitement (12) étant configurée spécifiquement pour obtenir les informations d'emplacement du dispositif de communication à positionner en fonction du deuxième message de réponse de positionnement reçu par l'unité de réception.

11. Support de stockage lisible par ordinateur comprenant des instructions qui, en cours d'exécution, réalisent les étapes comprenant :
la réception (S101), par un premier dispositif de communication, d'un premier message de requête de positionnement, le premier message de requête de positionnement comprenant un identificateur d'un dispositif de communication à positionner, et le premier message de requête de positionnement étant utilisé pour demander des informations d'emplacement du dispositif de communication à positionner ;
l'obtention (S102), par le premier dispositif de communication, des informations d'emplacement du dispositif de communication à positionner en fonction de l'identificateur du dispositif de communication à positionner en utilisant une technologie de communication sans fil à courte portée ;
le stockage (S202), par le premier dispositif de communication, d'une correspondance entre l'identificateur et les informations d'emplacement obtenues qui sont du dispositif de communication à positionner en fonction de l'identificateur du dispositif de communication à positionner et les informations d'emplacement du dispositif de communication à positionner ; et
la détermination (S204), par le premier dispositif de communication, des informations d'emplacement actualisées du dispositif de communication à positionner à partir de la correspondance stockée en fonction de l'identificateur du dispositif de communication à positionner,
**caractérisé en ce que** les informations d'emplacement obtenues du dispositif de communication à positionner comprennent des informations envoyées à partir du dispositif de communication à positionner et indiquant qu'un support du dispositif de communication à positionner se déplace vers une destination, et la correspondance stockée comprend les informations que le support se déplace vers la destination.

12. Support de stockage lisible par ordinateur selon la revendication 11, avant l'obtention, par le premier dispositif de communication, des informations d'emplacement du dispositif de communication à positionner en fonction de l'identificateur du dispositif de communication à positionner en utilisant une technologie de communication sans fil à courte portée, le support de stockage comprenant en outre des instructions qui, en cours d'exécution, réalisent :
la réception (S302), par le premier dispositif de communication en utilisant la technologie de communication sans fil à courte portée, d'un message diffusé envoyé par le dispositif de communication à positionner, le message diffusé comprenant l'identificateur et les informations d'emplacement qui sont du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
l'obtention (S303), par le premier dispositif de communication, des informations d'emplacement du dispositif de communication à positionner en fonction du message diffusé.

13. Support de stockage lisible par ordinateur selon la revendication 11, avant l'obtention, par le premier dispositif de communication, des informations d'emplacement du dispositif de communication à positionner en fonction de l'identificateur du dispositif de communication à positionner en utilisant une technologie de communication sans fil à courte portée, le support de stockage comprenant en outre des instructions qui, en cours d'exécution, réalisent :
la réception (S402), par le premier dispositif de communication en utilisant la technologie de communication sans fil à courte portée, d'un message diffusé envoyé par le dispositif de communication à positionner, le message diffusé comprenant l'identificateur du dispositif de communication à positionner ;
l'établissement (S403), par le premier dispositif de communication, d'une liaison de communication vers le dispositif de communication à positionner en fonction du message diffusé ;
l'envoi (S404), par le premier dispositif de communication, d'un message de requête d'informations d'emplacement au dispositif de communication à positionner en utilisant la liaison de communication ; et
la réception (S405), par le premier dispositif de communication, d'un message de réponse d'informations d'emplacement envoyé par le dispositif de communication à positionner, le message de réponse d'informations d'emplacement comprenant les informations d'emplacement du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
l'obtention (S406), par le premier dispositif de communication, des informations d'emplacement du dispositif de communication à positionner en fonction du message de réponse d'informations d'emplacement.

14. Support de stockage lisible par ordinateur selon la revendication 11, avant l'obtention, par le premier dispositif de communication, des informations d'emplacement du dispositif de communication à positionner en fonction de l'identificateur du dispositif de communication à positionner en utilisant une technologie de communication sans fil à courte portée, le support de stockage comprenant en outre des instructions qui, en cours d'exécution, réalisent :
la réception (S502), par le premier dispositif de communication en utilisant la technologie de communication sans fil à courte portée, d'un message diffusé envoyé par le dispositif de communication à positionner, le message diffusé comprenant l'identificateur du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
la détermination (S503), par le premier dispositif de communication, des informations d'emplacement du dispositif de communication à positionner en fonction de l'intensité du signal du message diffusé.

15. Support de stockage lisible par ordinateur selon la revendication 11, avant l'obtention, par le premier dispositif de communication, des informations d'emplacement du dispositif de communication à positionner en fonction de l'identificateur du dispositif de communication à positionner en utilisant une technologie de communication sans fil à courte portée, le support de stockage comprenant en outre des instructions qui, en cours d'exécution, réalisent :
l'envoi (S602), par le premier dispositif de communication, d'un deuxième message de requête de positionnement à un troisième dispositif de communication, le deuxième message de requête de positionnement comprenant l'identificateur du dispositif de communication à positionner, et le deuxième message de requête de positionnement étant utilisé pour demander les informations d'emplacement du dispositif de communication à positionner, de sorte que le troisième dispositif de communication obtient les informations d'emplacement du dispositif de communication à positionner en fonction de l'identificateur du dispositif de communication à positionner en utilisant la technologie de communication sans fil à courte portée ; et
la réception (S603), par le premier dispositif de communication, d'un deuxième message de réponse de positionnement envoyé par le troisième dispositif de communication, le deuxième message de réponse de positionnement comprenant les informations d'emplacement du dispositif de communication à positionner ; et
l'obtention, par le premier dispositif de communication, des informations d'emplacement du dispositif de communication à positionner en fonction de l'identificateur du dispositif de communication à positionner en utilisant une technologie de communication sans fil à courte portée comprenant :
l'obtention (S604), par le premier dispositif de communication, des informations d'emplacement du dispositif de communication à positionner en fonction du deuxième message de réponse de positionnement.
